# EUROPÄISCHE PATENTANMELDUNG

(11) **EP 1 384 936 A1**
(43) Veröffentlichungstag der Anmeldung: **28.01.2004**
(21) Anmeldenummer: 03001119.1
(22) Anmeldetag: 31.05.2002
(51) Int. Cl.: F16L 55/033

(54) **Schalldämpferanordnung für einen Strömungskanal, insbesondere für ein Ansaughaus einer Gasturbine**

(62) Teilanmeldung aus: 02012115.8
(71) Anmelder: SIEMENS AKTIENGESELLSCHAFT, 80333 München (DE)
(72) Erfinder: Ludwig, Ludwin, 91352 Hallerndorf (DE); Schulze, Günther, Dr., 90556 Seukendorf (DE); Schüz, Wolfgang, 91056 Erlangen (DE)

(57) **Zusammenfassung**

Bei einer erfindungsgemäßen Schalldämpferanordnung (15) sind Schalldämpferelemente (23) in Reihen angeordnet, welche jeweils quer zur Strömungsrichtung (19) orientiert sind; die Schalldämpferelemente (23) selbst sind dabei jeweils längs zur Strömungsrichtung (19) orientiert. Die Abströmkanten (24) der Schalldämpferelemente (23) mindestens einer Schalldämpferreihe (21), weisen Leitbleche (25) auf, wobei auf eine Ausstattung der Schalldämpferelemente (23) der in Strömungsrichtung (19) letzten Schalldämpferreihe (21) verzichtet werden kann.

## Beschreibung

Die Erfindung betrifft eine Schalldämpferanordnung für einen Strömungskanal, insbesondere für ein Ansaughaus einer Gasturbine.

Eine derartige Schalldämpferanordnung soll die durch eine Strömung, beispielsweise eine Luft- und/oder Gasströmung, in einem Strömungskanal verursachte, störende Geräuschentwicklung und Anfachung von Schwingungen beseitigen oder zumindest mildern.

Störende Schwingungen, beispielsweise des Ansaughauses und der Schalldämpferanordnung, sollen weitgehend vermieden werden.

Störende Schwingungen werden besonders dann erzeugt, wenn es in der Strömung zu einer unerwünschten Verwirbelung des Strömungsmediums kommt. Insbesondere dann, wenn der Strömungskanal mit verschiedenen Betriebsdrücken und/oder -geschwindigkeiten des Strömungsmediums betrieben wird, beispielsweise das Ansaughaus einer Gasturbine, wo je nach geforderter Leistungsabgabe der Druck und/oder die Geschwindigkeit der angesaugten Luft stark schwankt, sind Maßnahmen zur Vermeidung, insbesondere selbsterregter Schwingungen schwierig, da diese jeder Betriebssituation Rechnung tragen sollten.

Bekannte Schalldämpfungsmaßnahmen umfassen beispielsweise die Anordnung einer Anzahl an Schalldämpferelementen im Strömungskanal, beispielsweise Platten, wodurch im Wesentlichen die Strömung entlang eines gewünschten Weges durch den Strömungskanal geführt werden soll, um unerwünschte Verwirbelungen und die damit zusammenhängende Schwingungsproblematik zu lindern.

Verändern sich jedoch während des Betriebs des Strömungskanals die Betriebsbedingungen wie beispielsweise der Druck und/oder die Strömungsgeschwindigkeit des Strömungsmediums, so kommt es häufig vor, dass die sich einstellende Strömung z.B. in Folge einer kleinen Störung gravierend vom gewünschten Weg abweicht. Durch die sich dann einstellenden, unerwünschten und meistens asymmetrischen Druckverhältnisse werden oft auch die Schalldämpferelemente selbst zum Schwingen angeregt.

Beispiele für derartige, bekannte Anordnungen, welche hinsichtlich einer unerwünschten Schwingungsanregung der Schalldämpferelemente problematisch sind, sind Anordnungen von mehreren, in Strömungsrichtung hintereinander angeordneten Reihen an Schalldämpferelementen quer zur Strömungsrichtung, wobei die Schalldämpferelemente selbst längs zur Strömungsrichtung angeordnet sind.

Die einer vorausgehenden Reihe folgende nächste Reihe kann dann bezüglich der vorausgehenden Reihe quer versetzt ("auf Lücke") oder nicht quer versetzt ("in line") angeordnet sein.

Im ersten Fall teilt sich die Strömung, beispielsweise eine Luftströmung, welche zwischen zwei Schalldämpferelementen der vorausgehenden Reihe geführt ist, bei niedrigen Strömungsgeschwindigkeiten auf die durch die benachbarten drei Schalldämpferelemente der nächsten Reihe gebildeten zwei Strömungsgassen, insbesondere symmetrisch, auf.

Ab einer bestimmten Strömungsgeschwindigkeit, im Falle einer Gasturbine ab einer bestimmten Leistungsstufe, sind die Störungen in der Strömung so groß, dass sich die Luftströmung zufällig und ungleichmäßig aufteilt, so dass im Extremfall nur noch eine der o.g. zwei Strömungsgassen der nächsten Reihe den Luftstrom weiter führt, wobei der Luftstrom zwischen den zwei Strömungsgassen pendeln kann.

Die sich dann einstellenden asymmetrischen Druckverhältnisse können dann ein oder mehrere Schalldämpferelemente nach einer Seite biegen, bis das Schalldämpferelement bei Überschreiten eines bestimmten Biegewinkels abrupt zurückschwingt und die Strömungsverhältnisse sich dadurch schlagartig ändern ("Flip-Flop-Effekt").

Derartige Anregungen der Schalldämpferelemente selbst sind unerwünscht, da sie sich auf den umgebenden Strömungskanal und weitere Bauteile in der Umgebung übertragen und beispielsweise zu Schäden führen können.

Im Falle der "in line" angeordneten Schalldämpferreihen können die selben Effekte auftreten, meistens jedoch erst ab höheren Strömungsgeschwindigkeiten im Vergleich zum ersten Fall. "In line"-Anordnungen haben zwar eine höhere untere Grenze für die Strömungsgeschwindigkeit, ab welcher sich die o.g. unerwünschten Effekte einstellen, sind jedoch hinsichtlich ihrer schalldämpfenden Eigenschaften den quer versetzt angeordneten Schalldämpferreihen unterlegen, da bei einer "in line"-Anordnung ein direkter geradliniger Schallweg durch die Schalldämpferreihen möglich ist.

Der Erfindung liegt die Aufgabe zu Grunde, eine verbesserte Schalldämpferanordnung für einen Strömungskanal, insbesondere für ein Ansaughaus einer Gasturbine, anzugeben.

Dabei soll besonders die unerwünschte Schwingungsanregung der Schalldämpferelemente bestmöglich vermieden werden.

Eine erfindungsgemäße Lösung der Aufgabe ist gegeben durch eine Schalldämpferanordnung für einen Strömungskanal, umfassend mindestens zwei in Strömungsrichtung hintereinander und jeweils quer zur Strömungsrichtung angeordnete, durch eine Anzahl an Schalldämpferelementen gebildete Schalldämpferreihen, wobei die Schalldämpferelemente jeder Schalldämpferreihe jeweils längs zur Strömungsrichtung angeordnet sind und wobei die Abströmkanten der Schalldämpferelemente mindestens einer Schalldämpferreihe Leitbleche aufweisen.

Die Leitbleche können dabei beispielsweise als separate Bauteile ausgebildet und mit den jeweiligen Abströmkanten verbunden oder materialeinheitlich mit den jeweiligen Schalldämpferelementen als Teil der Schalldämpferelemente ausgebildet sein.

Bei dieser Ausführungsform der Erfindung dienen die Leitbleche dazu, die an den Schalldämpferelementen entlang strömende Strömung in eine gewollte Strömungsrichtung abzulenken oder die vorhandene, gewollte Strömungsrichtung beizubehalten. Auf diese Weise können kleine Störungen in der Strömung nicht dazu führen, dass die Strömung sich ungleichmäßig auf die Gassen zwischen den Schalldämpferelementen der benachbarten Schalldämpferreihe aufteilt und zwischen den Gassen pendelt. Mit dem Begriff "Leitbleche" sollen selbstverständlich auch solche zur Strömungsführung geeignete Elemente umfasst sein, welche nicht aus Blech, sondern z.B. aus Kunststoff oder sonstigen geeigneten Werkstoffen gefertigt sind. Die Werkstoffwahl für die Leitbleche geschieht am besten im Hinblick auf ein aktuell vorliegendes Strömungsmedium, so dass die dem Strömungsmedium ausgesetzten Leitbleche einem Angriff durch das Strömungsmedium (z.B. Abrieb oder Korrosion) möglichst gut standhalten und möglichst dauerfest sind.

Mittels der Leitbleche wird im Wesentlichen eine eindeutige Strömungsführung erzwungen, so dass weitestgehend eine Schwingungsanregung der Schalldämpferelemente vermieden ist.

In einer weiteren Ausführungsform der Erfindung sind die Schalldämpferelemente einer Schalldämpferreihe bezüglich der Schalldämpferelemente mindestens einer benachbarten Schalldämpferreihe in Strömungsrichtung gesehen in Reihe angeordnet.

Bei dieser sogenannten "in line"-Anordnung strömt die eine Schalldämpferreihe verlassende Strömung in die benachbarte Schalldämpferreihe in einer gewünschten Strömungsrichtung ein.

Im Vergleich zu einer Anordnung, bei welcher benachbarte Schalldämpferreihen zueinander versetzt angeordnet sind, ist bei dieser Ausführungsform die untere Grenzgeschwindigkeit, ab welcher sich infolge einer Störung Schwingungen der Schalldämpferelemente einstellen erhöht.

In einer anderen Ausführungsform der Erfindung sind die Schalldämpferelemente einer Schalldämpferreihe bezüglich der Schalldämpferelemente mindestens einer benachbarten Schalldämpferreihe in Strömungsrichtung gesehen quer zur Strömungsrichtung versetzt angeordnet.

Bei dieser Ausführungsform ist die Aufspaltung einer Teilströmung, welche eine Gasse zwischen zwei Schalldämpferelementen einer Schalldämpferreihe verlässt und in die benachbarte Schalldämpferreihe eintritt, in zwei Teilströmungen erwünscht.

Die versetzt angeordneten Schalldämpferreihen dieser Ausführungsform gestatten insbesondere eine genaue Strömungsführung, so dass eine unerwünschte Schwingungsentwicklung verursacht durch eine Anregung der Schalldämpferelemente vermieden ist.

Bevorzugt weisen die Abströmkanten der Mehrzahl an Schalldämpferelementen insbesondere alle Schalldämpferelemente, Leitbleche auf, mit Ausnahme der Abströmkanten derjenigen Schalldämpferelemente, mittels welcher die in Strömungsrichtung letzte Schalldämpferreihe gebildet ist.

Es kann auch lediglich ein Teil der Schalldämpferelemente an ihren jeweiligen Abströmkanten mit jeweils einem Leitblech versehen sein, mit Ausnahme der Abströmkanten derjenigen Schalldämpferelemente, mittels welcher die in Strömungsrichtung letzte Schalldämpferreihe gebildet ist.

Da nach der letzten Schalldämpferreihe keine weitere Schalldämpferreihe mehr folgt, muss die Strömung nach dieser letzten Schalldämpferreihe nicht mehr weiter ausgerichtet werden.

Bevorzugt weist mindestens ein Teil der Schalldämpferelemente Versteifungselemente auf.

In einigen Betriebsfällen der Schalldämpferanordnung kann es dazu kommen, dass die mittels der Strömung verursachte Schwingung von Schalldämpferelementen im Bereich der Eigenfrequenz dieser Schalldämpferelemente liegt. In diesem Fall ist mittels der Versteifungselemente eine Verschiebung der Eigenfrequenz der Schalldämpferelemente realisiert, so dass das Mitschwingen der Schalldämpferelemente reduziert ist.

Bei allen vorher genannten Ausführungsformen, bei denen Leitbleche zu Einsatz kommen, werden diese bevorzugt so dimensioniert, dass ihre jeweilige Länge mindestens so groß ist wie die Dicke der jeweiligen Schalldämpferelemente.

Die Länge kann auch beispielsweise aus dem Abstand zweier benachbarter Schalldämpferelemente einer Schalldämpferreihe und/oder aus dem Abstand zweiter benachbarter Schalldämpferreihen ermittelt werden; Versuchsreihen können dazu beitragen, o.g. Dimensionierung der Länge tabellarisch zu erfassen.

Im Folgenden werden zwei Ausführungsformen der Erfindung näher dargestellt.

Es zeigen:
- FIG 1: einen horizontalen Längsschnitt durch eine alternative Schalldämpferanordnung zur Lösung der Aufgabe der Erfindung mit einem speziell gewählten Abstand zwischen den Schalldämpferreihen,
- FIG 2: einen horizontalen Längsschnitt durch eine erfindungsgemäße Schalldämpferanordnung mit erfindungsgemäßen Leitblechen, und
- FIG 3: einen horizontalen Längsschnitt durch eine weitere erfindungsgemäße Schalldämpferanordnung.

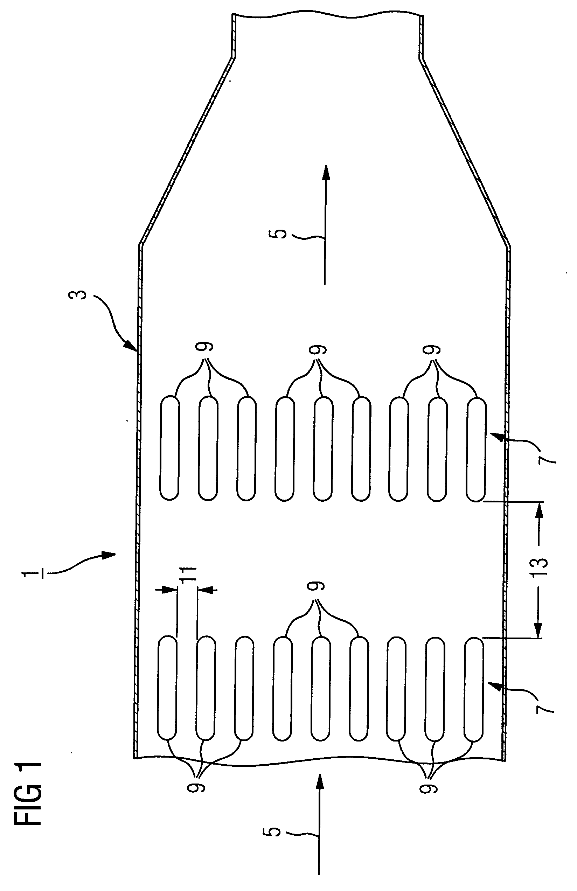

In FIG 1 ist schematisch ein horizontaler Längsschnitt durch eine Schalldämpferanordnung dargestellt, wobei die erfindungsgemäße Aufgabe alternativ gelöst ist durch einen speziell gewählten Abstand 13 zwischen zwei benachbarten Schalldämpferreihen 7 in Bezug auf einen Abstand 11 zwischen zwei Schalldämpferelementen einer Schalldämpferreihe 7.

Ein Strömungsmedium tritt in einer Strömungsrichtung 5 in einen Strömungskanal 3 ein.

Innerhalb des Strömungskanals 3 sind im vorliegenden Ausführungsbeispiel zwei Schalldämpferreihen 7 angeordnet, welche jeweils quer zur Strömungsrichtung 5 angeordnet sind, wobei die die Schalldämpferreihen 7 bildenden Schalldämpferelemente 9 in jeder Schalldämpferreihe 7 jeweils längs zur Strömungsrichtung 5 angeordnet sind.

Der Abstand 13 zwischen den beiden Schalldämpferreihen 7 beträgt mindestens in etwa das Vierfache, insbesondere mindestens das Sechsfache, des Abstands 11 zwischen zwei benachbarten Schalldämpferelementen 9 einer Schalldämpferreihe 7.

Die Schalldämpferelemente 9 sind dabei in den Schalldämpferreihen 7 jeweils in etwa äquidistant angeordnet.

Tritt nun ein Strömungsmedium in Strömungsrichtung 5 durch die erste der beiden Schalldämpferreihen 7 hindurch, so wird dabei das Strömungsmedium mittels der Schalldämpferelemente 9 in gerichtete Teilströmungen aufgeteilt, welche jeweils durch die von jeweils zwei benachbarten Schalldämpferelementen 9 gebildete Gassen strömen und aus diesen Gassen austreten. Im Falle einer nicht oder nur wenig gestörten Strömung des Strömungsmediums weisen die Teilströmungen jeweils eine Strömungsrichtung auf, welche im Wesentlichen identisch ist mit der Strömungsrichtung 5. Nimmt man nun an, dass das Strömungsmedium, insbesondere bei höheren Strömungsgeschwindigkeiten, Störungen insbesondere hinsichtlich der gewünschten Strömungsrichtung 5 aufweist, so weisen die Teilströmungen, welche aus der ersten Schalldämpferreihe austreten, Teilströmungsrichtungen auf, die sich mehr oder weniger stark von der gewünschten Strömungsrichtung 5 unterscheiden und ggf. zwischen den Gassen pendeln.

Damit derartige Störungen in der in Strömungsrichtung 5 folgenden nächsten Schalldämpferreihe nicht zur vorgenannten Problematik und damit zu unerwünschten Schwingungsanregungen der Schalldämpferelemente führen, ist mittels des Abstands 13 eine Beruhigungsstrecke realisiert, entlang welcher die die erste Schalldämpferreihe verlassenden Teilströmungen ihre Störungen, insbesondere Verwirbelungen, abbauen können, bevor sie in die nachfolgende Schalldämpferreihe eintreten.

So ist sicher gestellt, dass die Gassen zwischen jeweils zwei benachbarten Schalldämpferelementen 9, insbesondere der in Strömungsrichtung 5 zweiten Schalldämpferreihe, gleichmäßig durchströmt werden.

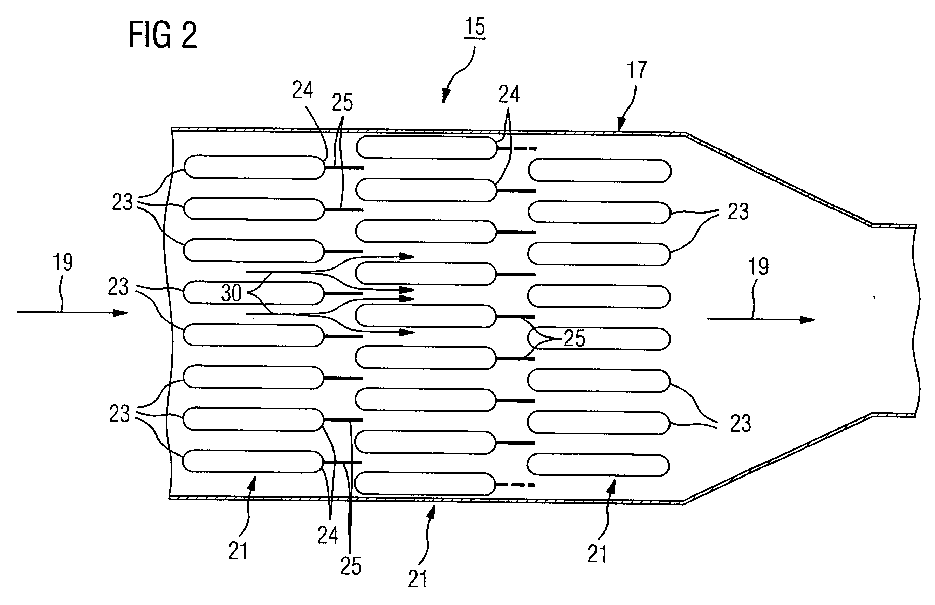

In der FIG 2 ist ein horizontaler Längsschnitt durch eine erfindungsgemäße Schalldämpferanordnung 15 dargestellt, wobei zur Lösung der erfindungsgemäßen Aufgabe Abströmkanten 24 von Schalldämpferelementen 23 mit Leitblechen 25 versehen sind.

Bei der Ausführungsform der FIG 2 tritt ein Strömungsmedium in Strömungsrichtung 19 in einen Strömungskanal 17 ein.

Innerhalb des Strömungskanals 17 sind bei dieser Ausführungsform drei Schalldämpferreihen 21 in Strömungsrichtung 19 hintereinander angeordnet, welche vom Strömungsmedium durchströmt werden.

In einem Unterschied zur Anordnung nach FIG 1 sind hierbei die Schalldämpferreihen 21 zueinander versetzt ("auf Lücke") angeordnet, so dass eine Teilströmung 30, welche eine der ersten beiden Schalldämpferreihen 21 verlässt, in der nachfolgenden Schalldämpferreihe aufgeteilt wird auf diejenigen beiden Strömungsgassen, welche der Strömungsgasse benachbart sind, aus welcher die Teilströmung 30 aus der vorangehenden Schalldämpferreihe 21 austritt.

Um eine möglichst gleichmäßige, stationäre Aufteilung der Teilströmungen 30, welche eine vorangehende Schalldämpferreihe 21 verlassen, auf die jeweils beiden benachbarten Strömungsgassen zwischen zwei Schalldämpferelementen 23 der nachfolgenden Schalldämpferreihe 21 zu erreichen, sind die Schalldämpferelemente 23 an ihren jeweiligen Abströmkanten 24 mit Leitblechen 25 versehen, welche bevorzugt eine Länge aufweisen, welche mindestens so groß ist wie die Dicke der Schalldämpferelemente 23 und welche weiterhin bevorzugt die Lücke zwischen zwei Schalldämpferreihen 21 schließt.

Mittels der Leitbleche 25 werden die Teilströmungen 30 derart ausgerichtet, dass die Verteilung der Teilströmungen 30 in der nachfolgenden Schalldämpferreihe 21 möglichst stationär und gleichmäßig ist und unerwünschte Schwingungsanregungen der Schalldämpferelemente vermieden sind.

Die in Strömungsrichtung 19 letzte Schalldämpferreihe 21 weist bevorzugt keine Leitbleche 25 auf, da das Strömungsmedium, welches diese letzte Schalldämpferreihe 21 verlässt, keine weitere Schalldämpferreihe anregen kann und daher zur Vermeidung von Schwingungsanregungen nicht weiter ausgerichtet werden muss.

Die in FIG 2 gestrichelt dargestellten Leitbleche aus der Anzahl der Leitbleche 25 können, müssen aber nicht vorhanden sein. Es handelt sich dabei insbesondere um Leitbleche von Schalldämpferelementen 23, zu denen keine zwei benachbarten Schalldämpferelemente der nachfolgenden Schalldämpferreihe existieren.

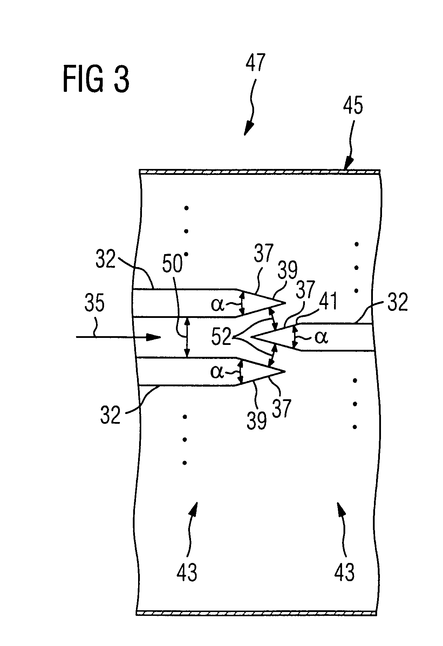

In FIG 3 ist eine weitere erfindungsgemäße Schalldämpferanordnung 47 dargestellt, wobei zur besseren Übersichtlichkeit nur einzelne Schalldämpferelemente 32 von Schalldämpferreihen 43 dargestellt sind.

Ein Strömungsmedium strömt in Strömungsrichtung 35 in einen Strömungskanal 45 ein.
Die Schalldämpferreihen 43 sind bei dieser Ausführungsform zueinander versetzt angeordnet, so dass eine zwischen zwei Schalldämpferelementen 32 einer der Schalldämpferreihen 43 geführte Strömung in der nächsten Schalldämpferreihe aufgeteilt wird in zwei Teilströmungen.

Erfindungsgemäß weisen die Abströmkanten 39 der Schalldämpferelemente 32 mindestens einer Schalldämpferreihe 43 Leitbleche 37 auf. Im vorliegenden Ausführungsbeispiel sind diese Leitbleche 37 materialeinheitlich mit den Schalldämpferelementen 32 und beispielsweise gebildet mittels einer spitz zulaufenden Ausformung der Abströmkanten 39 der Schalldämpferelemente 32. Ein Winkel α welcher von den Schenkeln der Abströmkante 39 eingeschlossen wird, ist dabei bevorzugt ein spitzer Winkel mit einem Winkelmaß von höchstens 90°.

Im vorliegenden Ausführungsbeispiel weisen auch die Anströmkanten 41 der einer ersten Schalldämpferreihe in Strömungsrichtung 35 folgenden zweiten Schalldämpferreihe Leitbleche 37 auf.

Diese an den Anströmkanten 41 angeordneten Leitbleche dienen hauptsächlich dem Zweck, eine definierte Teilgassenweite 52 zwischen einem Schalldämpferelement 32 einer vorangehenden Schalldämpferreihe 43 und einem Schalldämpferelement 32 einer in Strömungsrichtung 35 nachfolgenden Schalldämpferreihe zu erzeugen.

Die Teilgassenweite 52 ist dabei bevorzugt halb so groß wie eine Gassenweite 50 zwischen zwei benachbarten Schalldämpferelementen 32 der vorangehenden Schalldämpferreihe.

Auf diese Weise teilt sich eine zwischen zwei Schalldämpferelementen 32 einer Schalldämpferreihe geführte Strömung ohne Verlust an Strömungsgeschwindigkeit auf die beiden, mittels der Teilgassenweite 52 dimensionierten Teilgassen in der nachfolgenden Schalldämpferreihe 43 auf.
Dadurch, dass ein Strömungsgeschwindigkeitsverlust vermieden ist, wird auch die unerwünschte Bildung von Strömungswirbeln weitestgehend vermieden.

Die Gassenweite 50 und die Teilgassenweite 52 werden folglich vorteilhaft so dimensioniert, dass die zur Gassenweite 50 korrespondierende Strömungsquerschnittsfläche der Summe der beiden, zu den Teilgassenweiten 52 korrespondierenden Teilströmungsquerschnittsflächen entspricht.

Bevorzugt weisen also die Abströmkanten 24 der Schalldämpferelemente 23 mindestens einer Schalldämpferreihe 21 jeweils Leitbleche 25 auf, wobei an den Abströmkanten einzelner Schalldämpferelemente 23 auf das jeweilige Leitblech 25 verzichtet werden kann, insbesondere dann, wenn zum jeweiligen Schalldämpferelement 23 in der nachfolgenden Schalldämpferreihe 21 keine zwei benachbarten Schalldämpferelemente 23 existieren.

Zusammengefasst lässt sich die vorliegende Erfindung folgendermaßen darstellen:
Bei einer erfindungsgemäßen Schalldämpferanordnung 15 sind Schalldämpferelemente 23 in Reihen angeordnet, welche jeweils quer zur Strömungsrichtung 19 orientiert sind; die Schalldämpferelemente 23 selbst sind dabei jeweils längs zur Strömungsrichtung 19 orientiert. Die Abströmkanten 24 der Schalldämpferelemente 23 mindestens einer Schalldämpferreihe 21, weisen Leitbleche 25 auf, wobei auf eine Ausstattung der Schalldämpferelemente 23 der in Strömungsrichtung 19 letzten Schalldämpferreihe 21 verzichtet werden kann.

## Patentansprüche

1. Schalldämpferanordnung (15) für einen Strömungskanal (17), **gekennzeichnet durch**
mindestens zwei in Strömungsrichtung (19) hintereinander und jeweils quer zur Strömungsrichtung (19) angeordnete, **durch** eine Anzahl an Schalldämpferelementen (23) gebildete Schalldämpferreihen (21), wobei die Schalldämpferelemente (23) jeder Schalldämpferreihe (21) jeweils längs zur Strömungsrichtung (19) angeordnet sind und wobei die Abströmkanten (24) der Schalldämpferelemente (23) mindestens einer Schalldämpferreihe (21) Leitbleche (25) aufweisen.

2. Schalldämpferanordnung (1) nach Anspruch 1,
**dadurch gekennzeichnet,dass**
die Schalldämpferelemente (9) einer Schalldämpferreihe (7) bezüglich der Schalldämpferelemente (9) mindestens einer benachbarten Schalldämpferreihe (7) in Strömungsrichtung (5) gesehen in Reihe angeordnet sind.

3. Schalldämpferanordnung (15) nach Anspruch 1,
**dadurch gekennzeichnet, dass**
die Schalldämpferelemente (23) einer Schalldämpferreihe (21) bezüglich der Schalldämpferelemente (23) mindestens einer benachbarten Schalldämpferreihe (21) in Strömungsrichtung (19) gesehen quer zur Strömungsrichtung (19) versetzt angeordnet sind.

4. Schalldämpferanordnung (15) nach Anspruch 1,
**dadurch gekennzeichnet, dass**
die Abströmkanten (24) der Mehrzahl an Schalldämpferelementen(23) Leitbleche (25) aufweisen mit Ausnahme der Abströmkanten (24) derjenigen Schalldämpferelemente (23), mittels welcher die in Strömungsrichtung (19) letzte Schalldämpferreihe (21) gebildet ist.

5. Schalldämpferanordnung (15) nach einem der Ansprüche 1 bis 4,
**dadurch gekennzeichnet, dass**
mindestens ein Teil der Schalldämpferelemente (23) Versteifungselemente aufweist.
